# EUROPEAN PATENT APPLICATION

(11) **EP 4 231 167 A1**
(43) Date of publication of application: **23.08.2023**
(21) Application number: 22806467.1
(22) Date of filing: 22.04.2022
(51) Int. Cl.: G06F 16/13, G06F 16/172, G06F 16/182

(54) **DATA STORAGE METHOD AND APPARATUS BASED ON BLOCKCHAIN NETWORK**

(30) Priority: 12.05.2021 CN 202110515287
(71) Applicant: Tencent Technology (Shenzhen) Company Limited, Shenzhen, Guangdong, 518057 (CN)
(72) Inventor: LIANG, Zuodong, Shenzhen, Guangdong 518057 (CN); MO, Yang, Shenzhen, Guangdong 518057 (CN)
(74) Representative: Gunzelmann, Rainer
(86) International application number: PCT/CN2022/088368
(87) International publication number: WO 2022/237497

(57) **Abstract**

Embodiments of the present application disclose a data storage method and apparatus based on a blockchain network. The method comprises: receiving a storage request sent by a target device; storing multimedia data to a local space of a target storage node, and generating a target storage proof of the multimedia data; sending the target storage proof to a consensus node, so that the consensus node performs consensus verification on the multimedia data according to the target storage proof after receiving an adding to blockchain request for the multimedia data sent by the target device, and stores the data identifier of the multimedia data into a blockchain of the consensus node after the multimedia data succeeds in the consensus verification. By means of the embodiments of the present application, the operation efficiency and stability of a blockchain network can be improved.

## Description

This application claims priority to Chinese Patent Application No. 202110515287.1, entitled "METHOD AND APPARATUS FOR STORING DATA BASED ON BLOCKCHAIN NETWORK" and filed with the China National Intellectual Property Administration on May 12, 2021, which is incorporated herein by reference in its entirety.

### FIELD OF THE TECHNOLOGY

The present disclosure relates to the field of computer technology, and in particular, to data storage based on a blockchain network.

### BACKGROUND OF THE DISCLOSURE

Blockchain networks have drawn attention of users gradually with rapid development of computer technology. More and more users or enterprises choose to store data in the blockchain networks to prevent data tampering. Currently, data uploaded by users or enterprises are usually stored in blockchains of the blockchain networks. Storing all data, especially data occupying a large storage space, into the blockchain results in a large amount of data in the blockchain, and hence reduces an operation efficiency and stability of the blockchain network.

### SUMMARY

A method and an apparatus for storing data based on a blockchain network are provided according to embodiments of the present disclosure. Consensus and storage of multimedia data can be separated in the blockchain network, and an operation efficiency and stability of the blockchain network can be improved.

In an aspect, a method for storing data based on a blockchain network is provided according to embodiments of the present disclosure. The blockchain network comprises a consensus node and a target storage node, and a blockchain is deployed at the consensus node. The method is executable by the target storage node, and comprises: receiving a storage request transmitted by a target device, where the storage request carries multimedia data; storing the multimedia data in a local space of the target storage node, and generating a target storage certificate for the multimedia data, where the target storage certificate is configured to certify that the multimedia data is stored in the target storage node; and transmitting the target storage certificate to the consensus node to enable the consensus node to: perform verification on the multimedia data through a consensus mechanism according to the target storage certificate in response to receiving a request, which is for adding the multimedia data onto the blockchain and is transmitted by the target device, and store an identifier of the multimedia data into the blockchain at the consensus node in response to the multimedia data passing the verification. The identifier stored in the blockchain indicates that the multimedia data is successfully stored in the blockchain system.

In another aspect, a method for storing data based on a blockchain network is provided according to embodiments of the present disclosure. The blockchain network comprises a consensus node and a target storage node, and a blockchain is deployed at the consensus node. The method is executable by the consensus node, and comprises: receiving a request which is for adding multimedia data onto the blockchain and is transmitted by a target device; obtaining a target storage certificate for the multimedia data, where the target storage certificate is generated and transmitted to the consensus node by the target storage node in response to the target storage node receiving a storage request transmitted by the target device, and the target storage certificate is configured to certify that the multimedia data is stored in the target storage node; and performing verification on the multimedia data through a consensus mechanism according to the target storage certificate, and storing an identifier of the multimedia data into the blockchain at the consensus node in response to the multimedia data passing the verification. The identifier stored in the blockchain indicates that the multimedia data is successfully stored in the blockchain system.

In another aspect, an apparatus for storing data based on a blockchain network is provided according to embodiments of the present disclosure. The blockchain network comprises a consensus node and a target storage node, and a blockchain is deployed at the consensus node. The apparatus is deployed at the target storage node, and comprises: a receiving unit, configured to receive a storage request transmitted by a target device, where the storage request carries multimedia data; and a processing unit, configured to store the multimedia data in a local space of the target storage node, and generate a target storage certificate for the multimedia data, where the target storage certificate is configured to certify that the multimedia data is stored in the target storage node; where the processing unit is further configured to transmit the target storage certificate to the consensus node to enable the consensus node to: perform verification on the multimedia data according to the target storage certificate through a consensus mechanism in response to receiving a request, which is for adding the multimedia data onto the blockchain and is transmitted by the target device, and store an identifier of the multimedia data into the blockchain at the consensus node in response to the multimedia data passing the verification. The identifier stored in the blockchain indicates that the multimedia data is successfully stored in the blockchain system.

In another aspect, an apparatus for storing data based on a blockchain network is provided according to embodiments of the present disclosure. The blockchain network comprises a consensus node and a target storage node, and a blockchain is deployed at the consensus node. The apparatus is deployed at the consensus node, and comprises: an obtaining unit, configured to receive a request which is for adding multimedia data onto the blockchain and is transmitted by a target device, where the obtaining unit is further configured to obtain a target storage certificate for the multimedia data, the target storage certificate is generated and transmitted to the consensus node by the target storage node in response to the target storage node receiving a storage request transmitted by the target device, and the target storage certificate is configured to certify that the multimedia data is stored in the target storage node; and a processing unit, configured to perform verification on the multimedia data according to the target storage certificate through a consensus mechanism, and store an identifier of the multimedia data into the blockchain at the consensus node in response to the multimedia data passing the verification. The identifier stored in the blockchain indicates that the multimedia data is successfully stored in the blockchain system.

In another aspect, a device for storing data based on a blockchain network is provided according to embodiments of the present disclosure, comprising: a processor, configured to execute a computer program; and a computer-readable storage medium, storing the computer program; where the computer program when executed by the processor implements the foregoing method for storing data based on the blockchain network.

In another aspect, a computer-readable storage medium is provided according to embodiments of the present disclosure. The computer-readable storage medium stores a computer program, and the computer program is configured to be loaded and executed by a processor to perform the foregoing method for storing data based on the blockchain network.

In another aspect, a computer program product or a computer program is provided according to embodiments of the present disclosure. The computer program product or the computer program comprises computer instructions, and the computer instructions are stored in a computer-readable storage medium. A processor of a device for storing data reads the computer instructions from the computer-readable storage medium, and executes the computer instructions to cause the device to perform the foregoing method for storing data based on the blockchain network.

Herein the target device transmits the storage request to the target storage node. The target storage node stores the multimedia data carried by the storage request locally in response to the storage request, generates a target storage certificate for the multimedia data, and transmits the target storage certificate to the consensus node, so that the consensus node is capable to store the identifier of the multimedia data into the blockchain on the consensus node when the multimedia data passes the verification based on the consensus mechanism of the consensus node. Thereby, the data identifier in the blockchain indicates that the multimedia data has been successfully stored into the blockchain network. In the above process, the target storage node independent from the consensus node is configured to store the multimedia data having a large data volume, and the blockchain stores only the data identifier having a small data volume. Such separate storage of the multimedia data and the data identifier can improve security of the multimedia data to some extent, and can reduce a storage stress of the blockchain effectively, in comparison with a scheme of storing the multimedia data into the blockchain. Hence, a storage stress of the consensus node is reduces, and operation efficiency and stability of the consensus node are improved.

### BRIEF DESCRIPTION OF THE DRAWINGS

Figure 1a is a schematic architectural diagram of a data sharing system according to an embodiment of the present disclosure.
Figure 1b is a schematic structural diagram of a block according to an embodiment of the present disclosure.
Figure 1c is a schematic architectural diagram of a system for storing data based on a blockchain network according to an embodiment of the present disclosure.
Figure 2 is a schematic flowchart of a method for storing data based on a blockchain network according to an embodiment of the present disclosure.
Figure 3 is a schematic diagram of an interface for uploading multimedia data according to an embodiment of the present disclosure.
Figure 4 is a schematic diagram of a storage node built by multiple parties according to an embodiment of the present disclosure.
Figure 5 is a schematic diagram of an interface for displaying a notification message according to an embodiment of the present disclosure.
Figure 6 is a schematic flowchart of a method for storing data based on a blockchain network according to another embodiment of the present disclosure.
Figure 7 is a schematic flowchart of a method for storing data based on a blockchain network according to another embodiment of the present disclosure.
Figure 8 is a schematic diagram of an access device obtaining multimedia data obtained by according to an embodiment of the present disclosure.
Figure 9 is schematic diagrams of returning multimedia data through a benchmark storage node according to an embodiment of the present disclosure.
Figure 10 is a schematic structural diagram of an apparatus for storing data based on a blockchain network according to an embodiment of the present disclosure.
Figure 11 is a schematic structural diagram of another apparatus for storing data based on a blockchain network according to an embodiment of the present disclosure.
Figure 12 is a schematic structural diagram of a device for storing data based on a blockchain network according to an embodiment of the present disclosure.

### DESCRIPTION OF EMBODIMENTS

Embodiments of the present disclosure relate to blockchain technology. Hereinafter terms and concepts related to the blockchain technology are briefly introduced.

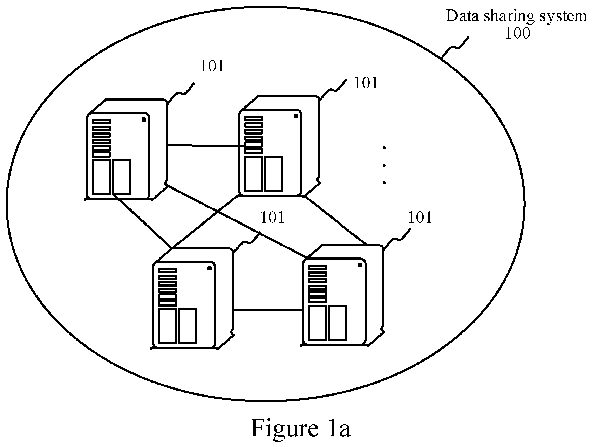

A blockchain network may be treated as a data sharing system 100, which refers to a system for sharing data among nodes. An exemplary structure of the data sharing system 100 may refer to Figure 1a. As shown in Figure 1a, the data sharing system 100 may comprise multiple nodes 101, which may be each client (each terminal device, each server, or the like) in the data sharing system 100. In order to provide information intercommunication in the data sharing system 100, there may be an information link among the nodes, so that information can be transmitted and shared among the nodes. The information link may be implemented in a following manner. Each node in the data sharing system 100 has a corresponding node identifier, and may store the node identifiers of other nodes in the data sharing system 100. Thereby, any node may share information (for example, broadcast a generated block to other nodes in the data sharing system 100) according to the node identifiers of other nodes. Each node may maintain a list of node identifiers as shown in the following table, and store node names and node identifiers correspondingly in the node identifier list. The node identifier may be an Internet Protocol (IP) address or any other type of information capable of identifying a node. Table 1 takes IP addresses only as an example for illustration.

**Table 1 List of Node identifiers**

| Node name | Node identifier |
|---|---|
| Node 1 | 117.114.151.174 |
| Node 2 | 117.116.189.145 |
| ... | ... |
| Node S (S being a positive integer) | xx.xx.xx.xx |

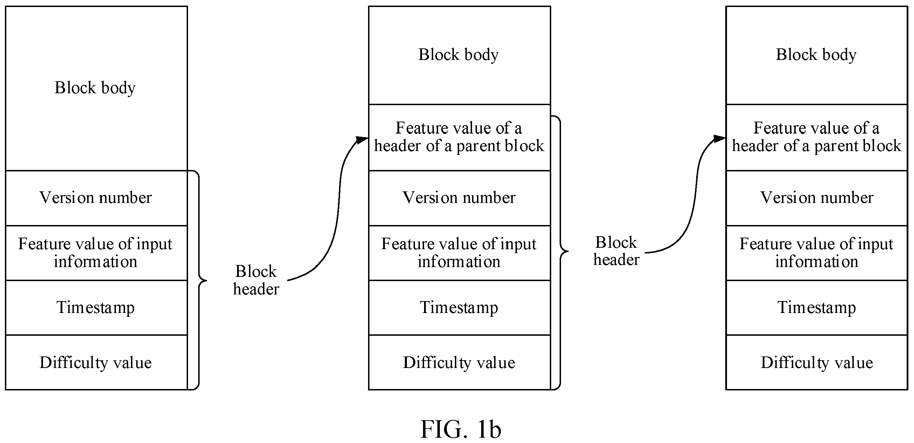

Each node in the data sharing system 100 stores the same blockchain. A blockchain (also known as a block chain) is a new mode of applying computer technologies such as distributed data storage, peer to peer (P2P) transmission, consensus mechanisms, and encryption algorithms. Essentially, the blockchain is a decentralized database, and is a string of data blocks generated and associated through cryptography. Each data block comprises information on a batch of network transactions, and the information is configured to verify the data block (anti-counterfeiting) and generate a next data block. The blockchain comprises multiple blocks, each of which comprises input information, and a node stores the blockchain to store the input information. A schematic structural diagram of a block may refer to Figure 1b. As shown in Figure 1b, a genesis block among the blocks comprises a block header and a block body. The block header stores a feature value of the input information, a version number, a timestamp, and a difficulty value, and the block body stores the input information. A next block of the genesis block takes the genesis block as a parent block, and also includes a block header and a block body. The block header stores a feature value of the input information, the feature value in the block header of the parent block, a version number, a timestamp, and a difficulty value which correspond to the current block. Other blocks can be deduced by analogy. Hence, in the blockchain, block data stored in each block is associated with block data stored in its parent block, which ensures security of the input information in the blocks.

The nodes in the data sharing system 100 verify input information through a consensus mechanism. After the input information passes the verification, a block is generated from the input information and then uploaded into the blockchain (that is, the block is added onto the blockchain), which may comprises a following process. When any node in the data sharing system 100 receives the input information, other nodes in the data sharing system 100 performs the verification on the input information based on a consensus algorithm, the block is generated from the input information after the verification succeeds, and the block is added onto the blockchain. Thereby, distributed storage of the input information is achieved, and the data stored on all nodes is consistent in the data sharing system 100. The node(s) that perform the verification on the input information according to the consensus algorithm are usually called consensus node(s).

A storage space of a consensus node is limited. In a case that all data passing the consensus verification is stored in the blockchain deployed at the consensus node, there would be a large storage stress on the consensus node, which reduces a remaining storage space in the consensus node and results in low operation efficiency and poor stability of the consensus node. For example, the to-be-stored data is large file data (such as multimedia data requiring a large storage or a large memory) that occupies a large storage space. Storing the large file data into the blockchain deployed at the consensus node would reduce the remaining storage space at the consensus node, and thereby reduce the consensus efficiency of the consensus node. In addition, the blockchain may be applied to some scenarios having a high requirement on information security, for example, the to-be-stored data concerns personal privacy or national security. In such case, it is not appropriate to store the data in all consensus nodes. On such basis, a solution for storing data based on a blockchain network is provided according to embodiments of the present disclosure, in order to improve storage efficiency of nodes in the blockchain network and maintain security and privacy of data. Herein the solution for storing data based on the blockchain network may be called the data storage solution for short. The data storage solution introduces a storage node which is independent from the consensus node and is responsible for storage into the blockchain network. The storage node responsible for the storage saves data from being stored into the blockchain. Separating data storage from data consensus can reduce the storage stress on the consensus node, ensure a consensus verification capability of the consensus node, and facilitate protecting data privacy.

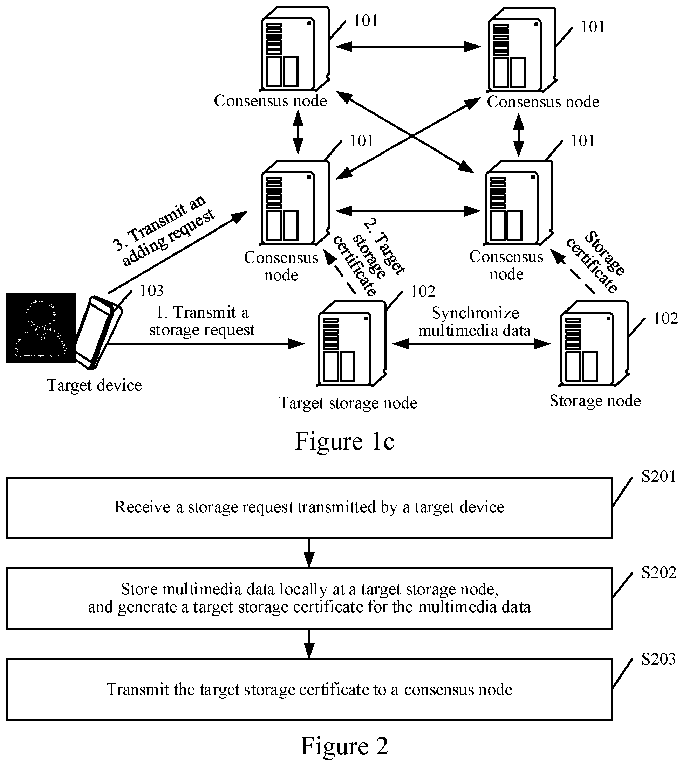

As an implementation, the data storage solution is applied to a system for storing data based on the blockchain network as shown in Figure 1c. In Figure 1c, the system for storing data based on the blockchain network may comprise, but is not limited to, node devices (such as a consensus node 101 and a storage node 102) in the blockchain network and a target device 103. A quantity and a type of each node device (for example, the consensus node 101 and the storage node 102) and the target device 103 are not limited herein. For example, the quantity of consensus nodes 101 is four and the quantity of storage nodes 102 is two in Figure 1c, while in practice, the quantity of consensus nodes 101 may be greater than four (for example, 100) and the quantity of storage nodes 102 may be greater than two (for example, 50). For example, the target device 103 may refer to a user terminal, a terminal device, or the like. The target device may include, but is not limited to, a smart device, such as a smart phone, a tablet computer, a portable personal computer, a mobile internet device, a smart TV, an in-vehicle device, and a headset device. The node device (such as the consensus node 101 and the storage node 102) may refer to a server having a larger storage space and a stronger computing capability. The server may include, but is not limited to, a data processing server, a web server, an application server, and another device having complex computing capabilities. The target device and the server (such as the consensus node and the storage node) may be directly or indirectly connected through wired or wireless communication, and a manner of the connection is not limited herein.

The data storage solution according to embodiments of the present disclosure may be jointly performed by the target device 103, the consensus node(s) 101, and the storage node(s) 102 in the data storage system as shown in Figure 1c. A blockchain is deployed at the consensus nodes 101. A general process of the data storage solution may refer to Figure 1c as follows. First, a target user may use the target device 103 to transmit a storage request to a target storage node 102 (such as any one of the storage nodes 102), and the storage request carries multimedia data (such as data such as files, audio, video, images, or the like). The target storage node 102 receives the storage request transmitted by the target device 103, stores the multimedia data in a local space of the target storage node 102 in response to the storage request, and generates a target storage certificate based on the multimedia data. The target storage certificate is configured to certify (i.e., represent) that the target storage node has stored the multimedia data, and the target storage node 102 further transmits the target storage certificate to the consensus node 101 (such as any one of the consensus nodes, a consensus node closest to the target storage node, a consensus node dedicated to receiving the storage certificate, or the like). Then, the consensus node 101 receives the target storage certificate transmitted by the target storage node 102, and adds the target storage certificate onto the blockchain on the consensus node as a block, and thereby the target storage certificate is uploaded onto the blockchain. Afterwards, the target user may transmit an adding request to the consensus node 101 through the target device 103, and the adding request is configured to request the consensus node 101 to add the identifier of the multimedia data onto the blockchain. In response to receiving the adding request transmitted by the target device 103, the consensus node 101 performs verification on the multimedia data through a consensus mechanism, and stores the identifier of the multimedia data into the blockchain as a block when the multimedia data passes the verification. Thereby, the identifier of the multimedia data is uploaded onto the blockchain. The identifier in the blockchain can indicate that the multimedia data is successfully stored into the blockchain network. Hereinabove it is taken as an example that the target device 103 does not belong to the node device(s) in the blockchain network. It is appreciated that the target device 103 may serve as a node device in the blockchain network, which is not described in detail herein.

Herein the storage node (such as the target storage node) responsible for storing the multimedia data is introduced into the blockchain network. The target storage certificate generated based on the multimedia data is transmitted to the consensus node, and the consensus node stores the identifier of the multimedia data into the blockchain at the consensus node. The identifier in the blockchain may be used for representing that the multimedia data indicated by the data identifier has been stored in the blockchain network. In such process, the target storage node independent from the consensus node is configured to store the multimedia data having a large data volume, and the blockchain stores only the data identifier having a small data volume. Such separate storage of the multimedia data and the data identifier can improve security of the multimedia data to some extent, and can reduce a storage stress of the blockchain effectively, in comparison with a scheme of storing the multimedia data into the blockchain. Hence, a storage stress of the consensus node is reduces, and operation efficiency and stability of the consensus node are improved.

On a basis of the foregoing data storage solution, a more detailed method for storing data based on a blockchain network is provided according to embodiments of the present disclosure. Hereinafter the method is introduced in detail in conjunction with the drawings.

Reference is made to Figure 2, which is a schematic flowchart of a method for storing data based on a blockchain network according to an embodiment of the present disclosure. The method for storing data may be executed by the target storage node (that is, any one of the storage nodes) in the system as shown in Figure 1c. The method for storing data comprises, but is not limited to, steps S201 to S203:
In step S201, a storage request transmitted by a target device is received.

The target device may refer to a device used by a target user, such as a smart phone, a personal computer, or the like. When the target user requires storing multimedia data into the blockchain network, the target user may uses the target device to transmit a storage request to the target storage node. The storage request carries the multimedia data, and hence the target storage node stores the multimedia data in response to receiving the storage request. The multimedia data may include, but is not limited to, an image, a file, an audio, a video, and other data. Herein a type of the multimedia data is not limited.

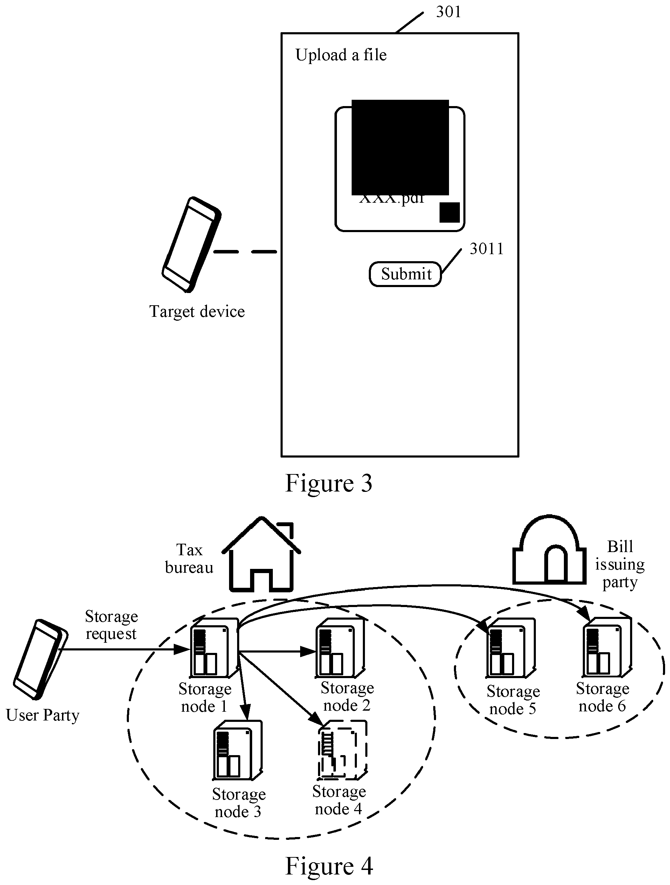

An exemplary process of the target user using the target device to transmit the multimedia data to the target storage node may refer to Figure 3, which shows an uploading interface 301 displayed on a terminal screen of the target device. The target user may upload the to-be-stored multimedia data, such as a file, through the uploading interface 301. The uploading interface 301 comprise a "submit" key 3011. When the "submit" key 3011 is triggered, the target device generates the storage request based on the multimedia data, and transmits the storage request to the target storage node. It is appreciate that the style of the uploading interface 301 and the process of uploading the multimedia data as shown in Figure 3 are exemplary. In an actual application scenario, there may be another style of the uploading interface 301 and another process of uploading the multimedia data.

Herein the target storage node may have different node types. In an embodiment, a node type of the target storage node may be a first node type or a second node type. The first node type refers to that at least two storage nodes are required to maintain a piece of data jointly. The second node type refers to that the storage node maintains a piece of data independently.

In step S202, the multimedia data is stored locally at the target storage node, and a target storage certificate is generated for the multimedia data.

After receiving the storage request transmitted by the target device, the target storage node may store the multimedia data carried in the storage request into a local space of the target storage node in response to the storage request. The target storage node may further perform legality verification on the multimedia data before storing the multimedia data into the local space, which depends on different service requirements. The step of storing the multimedia data into the local space is not performed unless the multimedia data passes such verification. The legality verification may include, for example, following aspects. First, it is checked whether a data format of the multimedia data meets a requirement of the target storage node (or blockchain network) on the data format. For example, the data format of the data stored in the target storage node is a file format, and the multimedia data is determined to fail the verification, that is, the multimedia data cannot be stored into the local space of the target storage node, when a format of the multimedia data is a table format. Second, it is checked whether the multimedia data is legal or ethical. For example, it is checked whether the multimedia data comprises violence information, false information, or the like. The multimedia data is determined to fail the verification, when illegal data or unethical information is detected in the multimedia data. Third, it is checked whether a source of the multimedia data complies with a rule. For example, the data stored in the blockchain is required to be from company A, and the multimedia data is determined to fail the verification, that is, the multimedia data cannot be stored into the local space of the target storage node, when it comes from company B. Hereinabove several types of legality verification are illustrated only as examples, where a manner of the target storage node verifying the multimedia data is not limited herein.

For example, it is assumed that the blockchain network is a network concerning bill storage, that is, only data related to bills, such as data of issuing an invoice and data of a issuing party, is stored in the blockchain. After receiving the multimedia data, the target storage node may check whether the multimedia data is related to bills, for example, check whether the multimedia data is of an invoice. The target storage node does not store the multimedia data, that is, the storage fails, in a case that the multimedia data is not related to a bill. The target storage node stores the multimedia data, that is, the storage succeeds, in a case that the multimedia data is related to a bill.

After receiving the storage request transmitted by the target device, the target storage node further generates the target storage certificate for the multimedia data based on the multimedia data carried in the storage request, in response to the storage request. The target storage certificate is similar to a proof. In a case that the target storage node has the target storage certificate, it indicates that the multimedia data has been successfully stored in the target storage node. A manner of the target storage node generating the target storage certificate for the multimedia data may include, but is not limited to following steps. A data identifier of the multimedia data and a node identifier of the target storage node are acquired. The target storage certificate for the multimedia data is generated based on the data identifier and the node identifier. Thereby, the target storage certificate may comprise the data identifier of the multimedia data and the node identifier of the target storage node.

The foregoing introduction to the blockchain technology indicates that the node identifier of the target storage node may be an IP address and any other information that can be used for identifying the target storage node (such as a unique identifier code allocated to the target storage node or a target storage node device when delivered from a factory, or a unique identifier code allocated to the target storage node device when added into a blockchain network). The node identifier of the target storage node may identify the target storage node uniquely, that is, a unique target storage node corresponding to the node identifier can be found according to the node identifier. Similarly, the data identifier of the multimedia data may be configured to identify the multimedia data uniquely, that is, a unique piece of multimedia data corresponding to the data identifier can be fetched according to the data identifier. A manner of determining the identifier of the multimedia data may include, but is not limited to, following steps. The multimedia data is analyzed to obtain a data attribute of the multimedia data, and the data attribute is hashed to obtain the identifier of the multimedia data. Alternatively, the data attribute of the multimedia data serves directly as the identifier of the multimedia data. The hash algorithm may include, but is not limited to, the Message Digest 4 (MD4) algorithm, the Message Digest 5 (MD5) algorithm, the Secure Hash Algorithm 1 (SHA1) algorithm, or the like, and is not specifically limited herein.

In some embodiments, the manner of determining the identifier of the multimedia data is selected according to whether the data attribute can identify the multimedia data uniquely. For example, the multimedia data is transaction data, and the data attribute is a transaction code of the transaction. Since the transaction code can identify the transaction data uniquely, it may serve directly as the data identifier of the multimedia data. As another example, the multimedia data is text, and the data attribute is a title of the text. Since the title cannot identify the text uniquely, for example, two texts may have the same title, the title of the text may be hashed to obtain the identifier of the multimedia data.

When the data attribute of the multimedia data cannot identify the multimedia data uniquely, the target storage node analyzing on the multimedia data to obtain the data attribute of the multimedia data may include at least one of the following aspects. In a first aspect, the multimedia data is subject to feature extraction to obtain a feature of the multimedia data, and the feature is added into the data attribute. A manner of the feature extraction depends on a type of the multimedia data. For example, the multimedia data is an image, and the feature extraction may be performed with respect to a color, a shape, or a boundary of the image to obtain the corresponding feature. As another example, the multimedia data is an audio, and a feature concerning the frequency domain or the power may be performed on the audio. In a second aspect, the multimedia data is subject to keyword extraction to obtain a keyword of the multimedia data, and the keyword information is added into the data attribute. In an embodiment, multiple candidate words may be determined from the multimedia data, and an important word may be determined from the candidate words as the keyword, so as to implement the extraction of the keyword of the multimedia data. For example, the multimedia data is an audio, and the keyword may be determined from the audio information (such as a name, a memory, duration, or the like) of the audio. In a third aspect, in a case that the multimedia data is text, the multimedia data is subject to abstract extraction to obtain an abstract of the multimedia data, and the abstract is added into the data attribute of the multimedia data. The digest extraction may refer to processing the text, which comprises simplifying and refining content of the text, to obtain a core idea of the text. The abstract of the text may express the main content of the text to some extent. In summary, the data attribute of the multimedia data may be obtained after processing the multimedia data, and the data attribute may include the feature of the multimedia data, the keyword of the multimedia data, and the abstract of the multimedia data. The data attribute of the multimedia data may be carried by the storage request and directly transmitted from the target device to the target storage node. For example, the multimedia data is transaction data, the data attribute of the multimedia data may be a transaction code, and the transaction code may be comprised in the storage request and directly transmitted from the target device to the target storage node.

The foregoing process of determining the identifier of the multimedia data is performed by the target storage node. In practice, such process may be alternatively performed by the target device. In such case, the target storage node may be saved from calculating the identifier of the multimedia data, which reduces a requirement on the computing capability of the target storage node and improves storage efficiency of the target storage node. An entity for executing the step of determining the identifier of the multimedia data is not limited herein.

In addition, in a case that the blockchain network comprises multiple storage nodes, synchronization of the multimedia data among the storage nodes may be supported herein. In such case, the multimedia data can be stored in a distributed manner in the blockchain network, which achieves backup of the multimedia data. The multimedia data may be transmitted among the storage nodes via peer-to-peer lending (P2P) links, in order to improve efficiency of the synchronization. In an implementation, the blockchain network comprises N storage nodes of a first node type, where N is an integer greater than 1, and the target storage node is a storage node among the N storage nodes. The first node type refers to that at least two storage nodes are required to maintain a piece of data jointly, that is, multiple storage nodes are required to store each piece of data synchronously. After the target storage node receives the multimedia data transmitted by the target device, the target storage node may select M reference storage nodes from the other storage nodes, where M ranges from 1 to N-1, and the other storage nodes are storage nodes other than the target storage node among the N storage nodes. The target storage node synchronizes the multimedia data to the M reference storage nodes, such that each of the M reference storage nodes transmits a reference storage certificate for the multimedia data to the consensus node after storing the multimedia data. Accordingly, after receiving an adding request, the consensus node performs verification on the multimedia data, through a consensus mechanism, according to the target storage certificate as well as the reference storage certificate transmitted by each reference storage node. A value of M may be set by an administrator according to a service requirement, and is not specifically limited herein.

When the target storage node is of the first node type, it can be treated as a multi-center storage node. That is, there are multiple storage nodes in the blockchain network which are configured to store the same data synchronously. The synchronous storage of the multimedia data through the multiple storage nodes of the first node type is suitable for an application scenario in which the storage is maintained by multiple parties. In such application scenario, each party participating in the storage of the multimedia data may build one or more respective storage nodes to store the multimedia data. A P2P link may be used for synchronizing the multimedia data among the storage nodes of the multiple parties or among the storage nodes of any party. Hereinafter such scenario is illustrated in conjunction with Figure 4, which takes bill storage as an example. As shown in Figure 4, a tax bureau, a bill issuing party, and a user party are involved in the bill storage, and the tax bureau and the bill issuing party are two parties that maintain the storage of the multimedia data. The tax bureau and the bill issuing party may build respective storage nodes to store invoices. For example, the tax bureau builds storage node 1, storage node 2, storage node 3, and storage node 4, and the bill issuing party builds storage node 5 and storage node 6. When any storage node (such as the storage node 1) built by the tax bureau receives the multimedia data (that is, an invoice), such storage node may synchronize the multimedia data to other storage nodes built by the tax bureau and the storage nodes built by the bill issuing party. Thereby, distributed storage of the multimedia data is implemented among all storage nodes.

It is takes an example in Figure 4 that the target device transmits the multimedia data to storage node 1. In practice, the target device may transmit the multimedia data to a storage node (such as storage node 5) other than storage node 1. After receiving the multimedia data, storage node 1 may synchronize the multimedia data selectively to a part of the storage nodes of the tax bureau or a part of the storage nodes of the bill issuing party. For example, the multimedia data is synchronized to only storage node 2 and storage node 4 of the tax bureau. In addition, after storage node 1 synchronizes the multimedia data to any reference storage node (such as storage node 4), such reference storage node may synchronizing the multimedia data to another reference storage node. A manner of synchronizing the multimedia data among the storage nodes is not limited herein.

In addition, the parties building the storage nodes may have different levels. Therefore, according to such difference, a quantity and a level of the storage nodes built by different parties may be different, and a quantity of storage nodes configured to store a certain type of multimedia data may be different. Herein the "level" may refer to a priority of storing the multimedia data. For example, a storage node with a higher level may have a priority of storing the multimedia data over a storage node with a lower level. It is appreciated the level may be defined otherwise, which is not described in detail herein. For example, company 1, company 2, and company 3 maintain the storage of the multimedia data jointly in an application scenario. The higher the level of a company is, the higher the level of storage nodes built by the company is, the more storage nodes the company is capable to build, and the more the storage nodes for storing target multimedia data (for example, any piece of the multimedia data) are. It is assumed that a level of company 1 is higher than a level of company 2, and the level of company 2 is higher than a level of company 3. Hence, the quantity and the level of the built storage nodes decreases from company 1 to company 3, and the quantity of storage nodes for storing the target multimedia data decreases from company 1 to company 3. Each storage node in the blockchain network corresponds to a level based on the forgoing level categorization.

The foregoing manner of categorizing parties participating in storage of the multimedia data into levels can satisfy a service requirement better and provide more application scenarios.

In step S203, a target storage certificate is transmitted to a consensus node.

After generating the target storage certificate for the multimedia data, the target storage node may further transmit the target storage certificate to the consensus node. Thereby, upon receiving the adding request, which is with respect to the multimedia data and transmitted by the target device, the consensus node is capable to perform verification on the multimedia data according to the target storage certificate through a consensus mechanism, and store the identifier of the multimedia data into the blockchain at the consensus node in a case that the multimedia data passes the verification. The identifier in the blockchain indicates that the multimedia data has been successfully stored into the blockchain network.

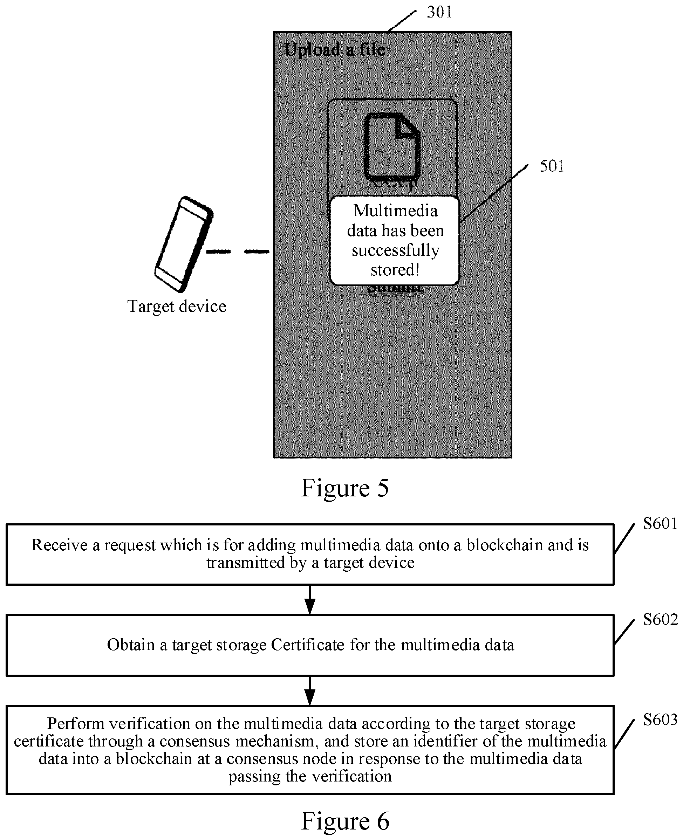

After the target storage node successfully transmits the target storage certificate to the consensus node, the target storage node may further return a notification message to the target device. The notification message is configured to notify the target user that the multimedia data has been successfully stored into the blockchain network, and that the identifier of the multimedia data has been successfully transmitted to the consensus node. A schematic diagram of an interface when the target device receives the notification message may refer to Figure 5. As shown in Figure 5, when receiving the notification message 501 transmitted by the target storage node, the target device may display the notification message 501 on a terminal screen of the target device. The notification message 501 may be, for example, "Multimedia data has been successfully stored", and may be displayed in the uploading interface 301. A position and a manner of displaying the notification message are not limited herein.

Herein the target device transmits the storage request to the target storage node.

The target storage node stores the multimedia data carried by the storage request locally in response to the storage request, generates a target storage certificate for the multimedia data, and transmits the target storage certificate to the consensus node, so that the consensus node is capable to store the identifier of the multimedia data into the blockchain on the consensus node when the multimedia data passes the verification based on the consensus mechanism of the consensus node. Thereby, the data identifier in the blockchain indicates that the multimedia data has been successfully stored into the blockchain network. In the above process, the target storage node independent from the consensus node is configured to store the multimedia data having a large data volume, and the blockchain stores only the data identifier having a small data volume. Such separate storage of the multimedia data and the data identifier can improve security of the multimedia data to some extent, and can reduce a storage stress of the blockchain effectively, in comparison with a scheme of storing the multimedia data into the blockchain. Hence, a storage stress of the consensus node is reduces, and operation efficiency and stability of the consensus node are improved.

Reference is made to Figure 6, which is a schematic flowchart of a method for storing data based on a blockchain network according to another embodiment of the present disclosure. The method for storing data may be executed by the consensus node in the system as shown in Figure 1c. The method for storing data includes, but is not limited to, steps S601 to S603.

In step S601, a request which is for adding multimedia data onto a blockchain and is transmitted by a target device is received.

The adding request transmitted by the target device is configured request the consensus node to store the identifier of the multimedia data into the blockchain. The adding request may carry the identifier of the multimedia data. The identifier may be generated by the target device, or returned to the target device after being generated by the target storage node. Thereby, after receiving the adding request transmitted by the target device, the consensus node can obtain the identifier of the multimedia data by parsing the adding request. In an embodiment, the adding request may carry the multimedia data only without the identifier. In such case, after receiving the adding request, the consensus node may use the same generation manner for manipulating on the multimedia data, as the target storage node (or the target device), to generate the identifier of the multimedia data, to obtain the data identifier of the multimedia data. For example, in a case that the target storage node hashes the data attribute of the multimedia data to obtain the identifier, the consensus node may also hashes the data attribute of the multimedia data carried in the adding request in a same manner to obtain the identifier.

In step S602, a target storage certificate for the multimedia data is obtained.

The target storage certificate is generated and transmitted to the consensus node by the target storage node, after the target storage node receives the storage request transmitted by the target device. The consensus node may store the target storage certificate into the blockchain at the consensus node, and the target storage certificate is configured to certify that the target storage node has stored the multimedia data. In an implementation, after receiving the request which is for adding the multimedia data onto the blockchain and transmitted by the target device, the consensus node may obtain the identifier of the multimedia data according to various implementations of the step S601. Accordingly, the consensus node can search the blockchain for a target storage certificate matching the identifier according to the identifier. In a case that the target storage certificate of the multimedia data has been stored into the blockchain before the consensus node searches for the target storage certificate according to the data identifier, that is, in a case that the target device transmits the adding request to the consensus node after the consensus node stores the target storage certificate into the blockchain, the consensus node can find the target storage certificate for the multimedia data according to the identifier. In a case that the target storage certificate of the multimedia data has not been stored into the blockchain before the consensus node searches for the target storage certificate according to the identifier, for example, the target device transmits the adding request to the consensus node before the target device transmits the storage request to the target storage node or before the consensus node stores the target storage certificate into the blockchain, the consensus node is not capable to find the target storage certificate, which is related to the identifier of the multimedia data carried by the adding request, from the blockchain according to the identifier. In such case, the consensus node may return a prompting message indicating a failed search to the target device, so that the target device can notify the user of a failure of adding the identifier of the multimedia data fails onto the blockchain.

In step S603, verification is performed on the multimedia data according to the target storage certificate through a consensus mechanism, and the identifier of the multimedia data is stored into the blockchain at the consensus node in response to the multimedia data passing the verification.

In one implementation, the consensus node may perform the consensus verification on the multimedia data according to the target storage certificate and a consensus policy.

The consensus policy may refer to a method (or logic) of performing the consensus verification on the multimedia data according to the target storage certificate. The consensus policy may be configured by an administrator according to a service requirement. The consensus policy may be stored in the blockchain as a smart contract, which is also called a certificate contract. When the consensus node needs to perform the consensus verification on the multimedia data, the consensus node may obtain the consensus policy from the blockchain and perform the consensus verification on the multimedia data accordingly. A manner of storing the consensus policy as a smart contract facilitates expanding and updating of the smart contract at any time with simple and convenient operations. Alternatively, the consensus policy may be embedded in an operating system of the consensus node. That is, the consensus policy is programmed and the obtained program is encoded into the operating system of the consensus node. Hence, the consensus logic of the consensus node is integrated with the consensus node, which can improve a performance of consensus verification, have high applicability, and support a non-Turing complete (that is, not supporting the smart contract at a device level) blockchain.

In an implementation, the consensus node performing the verification on the multimedia data through the consensus mechanism according to the target storage certificate may further comprise the following steps. The consensus node obtains a node type of the target storage node, where the node type is a first node type or a second node type. The first node type refers to that at least two storage nodes are required to maintain a piece of data jointly, and the second node type refers to that the storage node maintain a piece of data independently. In a case of the first node type, storage certificates which are for the multimedia data and stored in the blockchain are counted, and the multimedia data is determined to pass the consensus verification when a quantity of such storage certificates is greater than a quantity threshold. In a case of the second node type, the multimedia data is determined to pass the consensus verification.

Specific description of the first node type may refer to the forgoing description concerning the step S202 in an embodiment as shown in Figure 2, which is not repeated herein. The target storage node of the second node type may be regarded as a strong centralized storage node. When the target storage node is of the second node type, the foregoing implementation of performing the verification on the multimedia data is applicable to a scenario having an authoritative party. The authoritative party may refer to a core enterprise or a third-party data hosting institution. In such scenario, the authoritative party is responsible for building the storage node and is responsible for storing the multimedia data, which can ensure security and privacy of the multimedia data to some certain extent. The authoritative party may build a single storage node to store the multimedia data, or build multiple storage nodes to expand a storage space for storing the multimedia data, where the multiple storage nodes are owned by the authoritative party. A scenario of bill storage which involves a tax bureau, a bill issuing party, and a user party is taken as an example. The tax bureau may serve as the authoritative party which is responsible for building the storage node and responsible for storing the multimedia data.

The foregoing description suggests that a manner of the consensus node performing the consensus verification on the multimedia data depends on the node type of the target storage node. In a case that the target storage node is of the second node type, it indicates that the target storage node is a strong centralized storage node, that is, the multimedia data is stored by the strong centralized storage node only in the blockchain. In a case that the consensus node obtains the target storage certificate from the blockchain, it indicates that the strong centralized storage node has successfully stored the multimedia data, and the multimedia data can be determined to pass the consensus verification performed by the consensus node. In a case that the target storage node is of the first node type, it indicates that the target storage node is a multi-center storage node, that is, data in the blockchain network are maintained jointly in storage nodes built by multiple parties. In other words, another storage node owned by another party (another enterprise, another individual, or the like) in the blockchain network. In such case, the consensus node needs to check whether a quantity of storage nodes storing the multimedia data reaches a threshold among other storage nodes in the blockchain network. Only when a quantity of storage nodes storing the multimedia data is greater than a threshold, it indicates that each party stores the multimedia data, and hence the multimedia data is determined to pass the consensus verification.

As described in the foregoing embodiment as shown in Figure 2, in a case that the target storage node is of the first node type, the target storage node may synchronize the multimedia data to the reference storage node(s), so that the reference storage node(s) generate the reference storage certificate for the multimedia data and transmit the reference storage certificate(s) to the consensus node. Thereby, the consensus node stores the reference storage certificate(s) into the blockchain, and can perform the consensus verification on the multimedia data according to the target storage certificate and the reference storage certificate(s) which are transmitted from each reference storage node. When performing the consensus verification on the multimedia data, the consensus node may count the storage certificates which are for the multimedia data and stored in the blockchain, so as to implement the process of performing the verification on the quantity of storage nodes storing the multimedia data. For example, the consensus node may count five storage certificates, which including the target storage certificate and the reference storage certificates, for the multimedia data in the blockchain according to the identifier of the multimedia data. In such case, it can be determined that the multimedia data is stored in the target storage node and four reference storage nodes in the blockchain network.

The foregoing quantity threshold may be a fixed value configured by an administrator according to a service requirement. For example, the quantity threshold configured according to a requirement of a certain service is 3, and there are five storage nodes in the blockchain network. When there are four storage certificates for the multimedia data in the blockchain, as counted by the consensus node, it indicates that there are four storage nodes storing the multimedia data in the blockchain network, and the multimedia data is determined to pass the consensus verification. The foregoing description concerning the step S202 in an embodiment as shown in Figure 2 suggests that storage nodes in the blockchain network may be categorized into different levels. In such case, the quantity threshold may further be determined based on quantities of storage nodes at different levels. In an implementation, the consensus node obtains one or more storage certificates for the multimedia data from the blockchain according to the identifier, obtains level(s) of storage node(s) which are indicated by the one or more storage certificates, and counts the storage node(s) at different levels. In a case that a quantity of the storage node(s) at each level is greater than the threshold corresponding to such level, the multimedia data is determined to pass the consensus verification.

For example, it is assumed that the blockchain network comprises storage nodes A and B at level 1, storage nodes C, D, E at level 2, and storage nodes F and G at level 3. Quantity thresholds of the storage certificates are configured as follows. The quantity threshold is 1 for the storage certificates transmitted by storage nodes at level 1, the quantity threshold is 1 for the storage certificates transmitted by storage nodes at level 2, and the quantity threshold is 1 for the storage certificates transmitted by storage nodes at level 3. In this example, the consensus node obtains storage certificate 1 transmitted by storage node A, storage certificate 2 transmitted by storage node B, storage certificate 3 transmitted by storage node C, storage certificate 4 transmitted by storage node D, storage certificate 5 transmitted by storage node F, and storage certificate 6 transmitted by storage node G from the blockchain according to the identifier. Hence, it is determined that the consensus node obtains six storage certificates. There are two storage certificates transmitted by the storage nodes at level 1, exceeding the quantity threshold of 1 for level 1. There are two storage certificates transmitted by the storage nodes at level 2, exceeding the quantity threshold 2 for level 2. There are two storage certificates transmitted by the storage nodes at level 3, exceeding the quantity threshold of 1 for level 3. Accordingly, the quantities of the storage certificates corresponding to the storage nodes at different levels are all greater than the corresponding quantity thresholds, and the multimedia data is determined to pass the consensus verification performed by the consensus node.

Besides checking whether the quantity of the storage certificates is greater than the quantity threshold in the foregoing description, it may be determined whether a calculated storage evaluation score of the multimedia data is greater than a score threshold, in order to determine whether the multimedia data passes the consensus verification. In an implementation, the consensus node obtains one or more storage certificates for the multimedia data from the blockchain according to the identifier, and obtains levels of the storage nodes indicated by the one or more storage certificates. The consensus node calculates a weighted sum on the quantities of the storage certificates corresponding to storage nodes at different levels, so as to obtain the storage evaluation score of the multimedia data. In a case that the storage evaluation score is greater than the score threshold, the multimedia data is determined to pass the consensus verification.

For example, it is assumed that the blockchain network comprises storage nodes A and B at level 1, storage nodes C, D, E at level 2, and storage nodes F and G at level 3. The score threshold is 1.8, a weight of level 1 is 40%, a weight of level 2 is 20%, and a weight of level 3 is 40%. In this example, the consensus node obtains storage certificate 1 transmitted by storage node A, storage certificate 2 transmitted by storage node B, storage certificate 3 transmitted by storage node C, storage certificate 4 transmitted by storage node D, storage certificate 5 transmitted by storage node F, and storage certificate 6 transmitted by storage node G from the blockchain according to the identifier. Hence, it is determined that the consensus node obtains six storage certificates. Ae weighted sum of the quantities of the storage certificates corresponding to storage nodes at the three levels are calculated as the storage evaluation score of the multimedia data, which is 2*40%+2*20%+2*40% = 2. Hence, the storage evaluation score of the multimedia data is 2, and greater than the score threshold 1.8. The multimedia data is determined to pass the consensus verification performed by the consensus node.

The foregoing manners of the consensus verification on the multimedia data are all exemplary, and another manner of the consensus verification may further be applicable to embodiments of the present disclosure. In addition, the foregoing description suggests that a process of the consensus node performing the consensus verification on the multimedia data may be somewhat independent from a process of the consensus node storing the storage certificate into the blockchain. On such basis, within a preset time period, when the consensus node counts storage certificates for the multimedia data being less than or equal to the quantity threshold at a first moment (e.g., at any moment), the consensus node may determine that the multimedia data fails the consensus verification only at the first moment. The consensus node may further counts the storage certificates for the multimedia data again at a second moment, and determine whether the quantity of the storage certificates is greater than the quantity threshold. The above operation repeats until the preset time period ends. The second moment is subsequent to the first moment in the preset time period.

Herein the consensus node receives the target storage certificate for the multimedia data, and stores the identifier of the multimedia data into the blockchain in response to the multimedia data passes the consensus verification. The data identifier in the blockchain indicates that the multimedia data has been successfully stored into the blockchain network. In the above process, the target storage node independent from the consensus node is configured to store the multimedia data having a large data volume, and the blockchain stores only the data identifier having a small data volume. Such separate storage of the multimedia data and the data identifier can improve security of the multimedia data to some extent, and can reduce a storage stress of the blockchain effectively, in comparison with a scheme of storing the multimedia data into the blockchain. Hence, a storage stress of the consensus node is reduces, and operation efficiency and stability of the consensus node are improved.

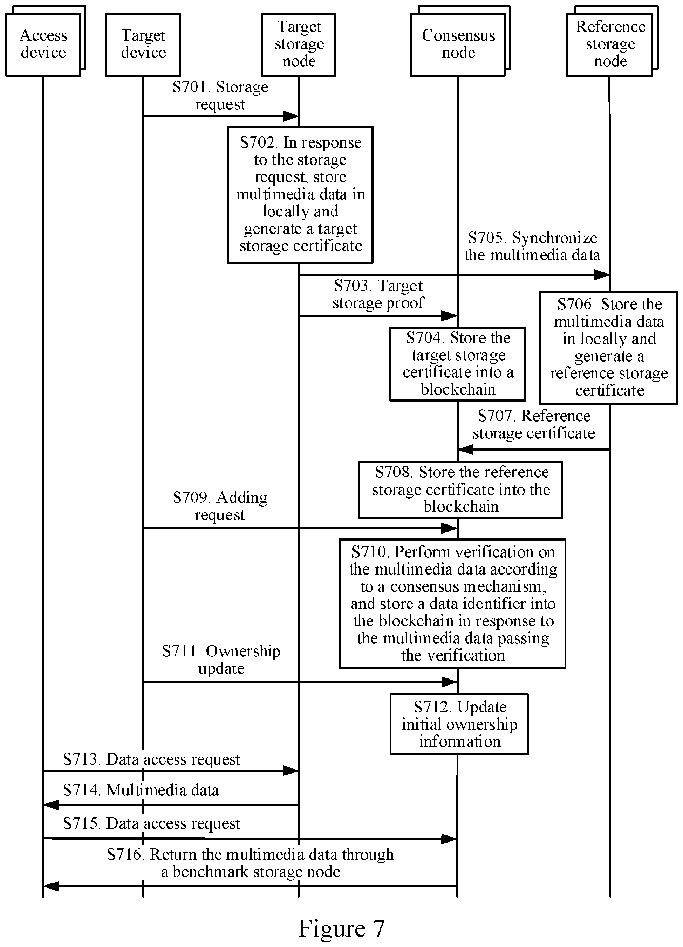

Reference is made to Figure 7, which is a schematic flowchart of a method for storing data based on a blockchain_network according to an embodiment of the present disclosure. The method for storing data may be jointly executed by the target device, the storage node, and the consensus node in the system ass shown in Figure 1c. The method for storing data comprises, but is not limited to, steps S701 to S716:
In step S701, the target device transmits a storage request to the target storage node.
In step S702, the target storage node stores the multimedia data locally at the target storage node in response to the storage request, and generates a target storage certificate for the multimedia data.
In step S703, the target storage node transmits the target storage certificate to the consensus node.
In step S704, the consensus node receives the target storage certificate transmitted by the target storage node, and stores the target storage certificate into the blockchain.
In step S705, the target storage node synchronizes the multimedia data to the reference storage node.
In step S706, the reference storage node(s) receive the multimedia data transmitted by the target storage node, store the multimedia data locally at the reference storage node(s), and generate reference storage certificate(s) for the multimedia data.
In step S707, the reference storage node(s) transmit reference storage certificate(s) to the consensus node.
In step S708, the consensus node stores the reference storage certificate(s) into the blockchain.
In step S709, the target device transmits an adding request to the consensus node.
In step S710, the consensus node performs verification on the multimedia data through a consensus mechanism in response to the adding request, and stores the identifier of the multimedia data into the blockchain in response to the multimedia data passes the verification.

Implementation of the steps S701 to S710 may refer to foregoing description concerning the steps S201 to S203 as shown in Figure 2 and the steps S601 to S603 as shown in Figure 6, which is not repeated herein. In addition, an order of executing a combination of the steps S703 and S704 and a combination of the steps S705 to S708 are not limited herein. In other words, the target storage node may first transmit the target storage certificate to the consensus node to enable the consensus node to add the target storage certificate onto the blockchain, and then synchronize the multimedia data to the reference storage node to enable the reference storage node to store the multimedia data. Alternatively, the target storage certificate may first synchronize the multimedia data to the reference storage node to enable the reference storage node to store the multimedia data, and then transmit the target storage certificate to the consensus node to enable the consensus node to add the target storage certificate onto the blockchain. Alternatively, the target storage node may transmit the target storage certificate to the consensus node and synchronize the multimedia data to the reference storage node simultaneously.

In step S711, the target device transmits an ownership update to the consensus node.

In step S712, the consensus node receives the ownership update transmitted by the target device, and updates initial ownership information according to the ownership update.

In the steps S711 and S712, information on ownership of the multimedia data is stored in the blockchain at the consensus node, and such information comprises one or more identifiers of device(s) having a permission to access the multimedia data. Herein the information on ownership, which is stored in the blockchain and has not been updated, is called the initial ownership information. The blockchain stores the initial ownership, and a process of updating the initial ownership may comprise following steps. When the consensus node receives the adding request transmitted by the target device, the consensus node determines that the target device has ownership of the multimedia data, and generates the initial ownership information of the multimedia data according to an identifier of the target device. The initial ownership information comprises the identifier of the target device, and is stored in the blockchain. In a case that the consensus node receives the ownership update transmitted by the target device, the consensus node updates the initial ownership information in the blockchain according to the ownership update. Updating the initial ownership may comprise one or more of following steps. An identifier of a device having permission to access the multimedia data is added. An identifier of an original device having permission to access the multimedia data is replaced. An identifier of an original device having permission to access the multimedia data is deleted. Accordingly, the ownership update may comprise one or more of: the newly added identifier, the replacement identifier, and the deleted identifier.

Besides being generated by the consensus node, the initial ownership information may be transmitted from the target device to the consensus node. In such case, the initial ownership information may further comprise identifiers of other devices, which are determined by the target user, besides the identifier of the target device. Alternatively, the initial ownership may be carried in the storage request when the target device transmits the storage request to the target storage node. After the multimedia data passes the consensus verification performed by the consensus node, the consensus node may upload the initial ownership information to the blockchain along with the identifier of the multimedia data. Alternatively, the target device may transmit the initial ownership information of the multimedia data, which is to be stored in the blockchain, to the consensus node or the target storage node at any moment after transmitting the storage request to the target storage node. In summary, a manner of storing the initial ownership information of the multimedia data in the blockchain is not specifically limited herein.

In step S713, an access device transmits a data-access request to the target storage node.

In step S714, the target storage node returns the multimedia data to the access device in response to the data-access request transmitted by the access device.

In the steps S713 and S714, since target storage node and the reference storage node may store the multimedia data, the access device may be configured to transmit the data-access request to the target storage node (or any reference storage node). The data-access request is for requesting the target storage node to return the multimedia data. The access device may be any device, such as the target device, and is not limited herein. In an implementation, the target storage node may receive the data-access request transmitted by an access device, and the data-access request carries the identifier of the multimedia data and an identifier of the access device. The access device may refer to any device that can communicate with the target storage node. The target storage node may read current ownership information of the multimedia data from the blockchain according to the identifier of the multimedia data, and the current ownership information comprises identifier(s) of current device(s) having an ownership of the multimedia data. The current device may refer to a device that has the ownership of multimedia data when the data-access request is received. The target storage node searches the current ownership information for the identifier of the access device (i.e., "hit" processing). In a case that the identifier of the access device is found in the current ownership information (i.e., there is a hit), the target storage node determines that the access device has a permission to access the multimedia data, and returns the multimedia data to the access device. The target device may transmit the data-access request to the reference storage node, such that the reference storage node can perform the foregoing steps.

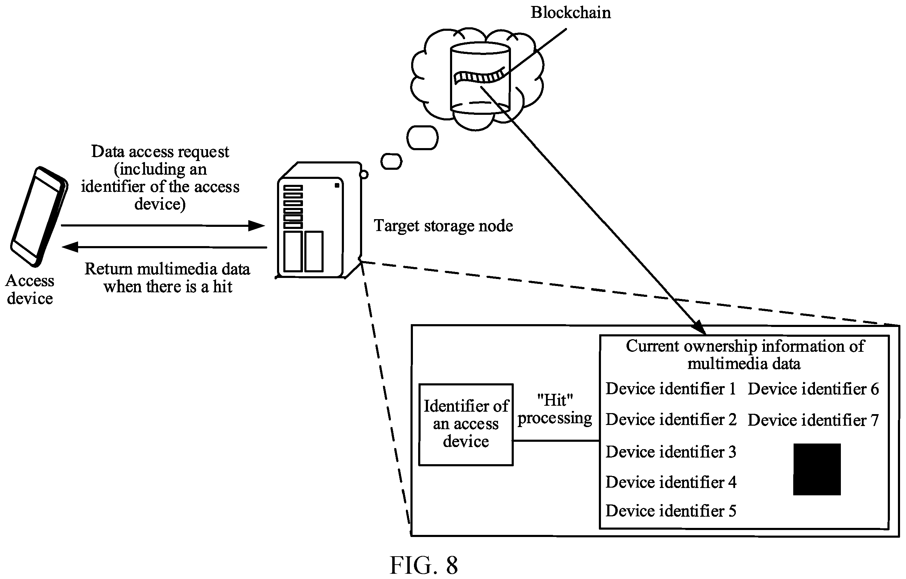

Hereinafter a scenario in which the access device requests to obtain the multimedia data is briefly described with reference to Figure 8. As shown in Figure 8, the access device may transmit the data-access request to the target storage node, and the data-access request carries the identifier of the multimedia data. Thereby, after receiving the data-access request, the target storage node may obtain the current ownership information of the multimedia data corresponding to the identifier from the blockchain, according to the identifier carried in the data-access request. Then, the target storage node then performs the "hit" processing according to the identifier of the access device carried in the data-access request and the one or more device identifiers comprised in the current ownership information. When the identifier of the access device exists in the current ownership information, it is determined that the identifier of the access device "hits" the current ownership information, that is, there is a hit. In such case, the access device is determined to have the permission to access the multimedia data, and the target storage node can return the multimedia data to the access device. Herein the "hit" processing is performed on the current ownership information of the multimedia data based on the identifier of the access device, and the multimedia data is not returned unless there is the hit, which can avoid leakage of the multimedia data and improve the security of the multimedia data.

In step S715, the access device transmits another data-access request to a consensus node.

In step S716, the consensus node returns the multimedia data to the access device through a benchmark storage node.

In the steps S715 and S716, since the consensus node stores the identifier of the multimedia data into the blockchain at the consensus node, the data identifier in the blockchain can indicate that the multimedia data has been successfully stored into the blockchain network. On such basis, the access device may transmit a data-access request to the consensus node, and the data-access request is for requesting the consensus node to return the multimedia data. In an implementation, the blockchain network comprises N storage nodes of a first node type, N is an integer greater than 1, the target storage node is a storage node among the N storage nodes, and the multimedia data has been synchronized to M reference storage nodes among the N storage nodes, where M ranges from 1 to N-1. In such case, the consensus node may receive the data-access request transmitted by the access device, and the data-access request carries the identifier of the multimedia data and an identifier of the access device. The consensus node reads current ownership information of the multimedia data from the blockchain according to the data identifier. The current ownership information is the newest ownership information stored in the blockchain when the data-access request is received. The current ownership information comprises identifier(s) of current device(s) having ownership of the multimedia data, and the current device refers to a device that has the ownership of multimedia data when the data-access request is received. The consensus node performs "hit" processing on the current ownership information based on the identifier of the access device. In a case that there is a hit, the consensus node selects the benchmark storage node from the M reference storage nodes and the target storage node, and transmits the multimedia data to the access device through the benchmark storage node.

The current ownership information of the multimedia data stored in the blockchain is: the ownership information stored in the blockchain at a moment the target storage node receives the data-access request. The current ownership information may be the initial ownership information, or may be ownership information after the initial ownership information is updated. Whether the current ownership information is the initial ownership information or the updated ownership information is not limited herein.

When the device identifier of the access device "hits" the current ownership information, the access device is determined to have the permission to access the multimedia data, and accordingly the benchmark storage node may be selected from the M reference storage nodes and the target storage nodes which store the multimedia data. Thereby, the multimedia data can be transmitted to the access device from the benchmark storage node. Selecting the benchmark storage node from the M reference storage nodes and the target storage node may include, but is not limited to, following manners. In a first manner, a storage node is randomly selected from the M reference storage nodes and the target storage node as the benchmark storage node. In a second manner, a distance between each storage node, of the M reference storage nodes and the target storage node, and the consensus node is calculated, and a storage node having a shortest distance to the consensus nodes serves as the benchmark storage node. For example, M = 2, a distance between reference storage node 1 and the consensus node is 1 km, a distance between reference storage node 2 and the consensus node is 1.1 km, and a distance between the target storage node and the consensus node is 0.9 km. Hence, the distance between the target storage node and the consensus node is the shortest, and the target storage node serves as the benchmark storage node. In a third manner, a network status of each storage node, of the M reference storage nodes and the target storage node, is detected, and a storage node of which the network status meets a preset condition serves as the benchmark storage node. The network status of the storage node may reflect a data transmission rate at the storage node. The data transmission rate of the storage node is fast when the network status of the storage node is good, and is slow when the network status of the storage node is poor. Optionally, the storage nodes are sorted according to the network status, e.g., sorted from the best network status to the worst network status, to obtain a sequence. The network status of the storage node ranking the first in the sequence is determined to be the best, and is determined to meet the preset condition. In such case, the storage node ranking the first in the sequence may serve as the benchmark storage node, which facilitates rapid transmission of the multimedia data and improving transmission efficiency. The foregoing manners for determining the benchmark storage node are all exemplary, and another manner suitable for determining the benchmark storage node may also be applicable herein.

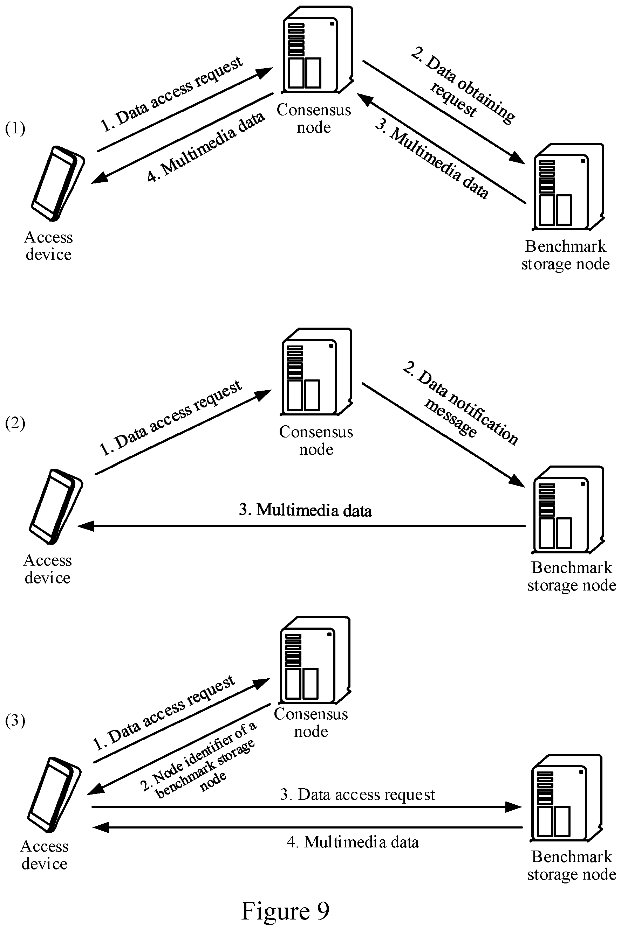

After selecting the benchmark storage node successfully, the consensus node may further return the multimedia data to the access device through the benchmark storage node, which may comprise, but is not limited to, following manners. In a first manner, the consensus node transmits a data-fetch request to the benchmark storage node, where the data-fetch request is for requesting the benchmark storage node to return the multimedia data. The consensus node receives the multimedia data returned by the reference storage node, and transmits the multimedia data to the access device. A schematic flow of such manner may refer to the first subfigure in Figure 9. In a second manner, the consensus node transmits a data notification message to the benchmark storage node, and the data notification message is for instructing the reference storage node to transmit the multimedia data to the access device. That is, the consensus node may instruct the reference storage node directly to return the multimedia data to the access device. In such case, the data notification message may carry the identifier of the access device, so that the benchmark storage node can find the access device according to the identifier. A schematic flow of such manner may refer to the second subfigure in Figure 9. In a third manner, the consensus node returns a node identifier of the benchmark storage node to the access device, such that the access device can transmit a data-access request to the reference storage node based on the node identifier and receives the multimedia data returned by the benchmark storage node. In other words, the consensus node may return the node identifier of the reference storage node to the access device, so that the access device may request the benchmark storage node to return the multimedia data based on the node identifier. A schematic flow of such manner may refer to the third subfigure in Figure 9. The forgoing manners of returning the multimedia data through the benchmark storage node are all exemplary, and another manner suitable for returning the multimedia data through the benchmark storage node may also be applicable herein.

Herein the storage node (such as the target storage node) responsible for storing the multimedia data is introduced into the blockchain network, generates the target storage certificate based on the multimedia data, and transmits the target storage certificate to the consensus node. Thereby, the consensus node stores the identifier of the multimedia data in the blockchain of the consensus node. The data identifier in the blockchain may be used for representing that the multimedia data indicated by the identifier has been stored in the blockchain network. In the above process, the target storage node independent from the consensus node is configured to store the multimedia data having a large data volume, and the blockchain stores only the data identifier having a small data volume. Such separate storage of the multimedia data and the data identifier can improve security of the multimedia data to some extent, and can reduce a storage stress of the blockchain effectively, in comparison with a scheme of storing the multimedia data into the blockchain. Hence, a storage stress of the consensus node is reduces, and operation efficiency and stability of the consensus node are improved.

Hereinabove the method according to embodiments of the present disclosure is described in detail. Correspondingly, hereinafter an apparatus is provided according to embodiments of the present disclosure to facilitate better implementation of the method.

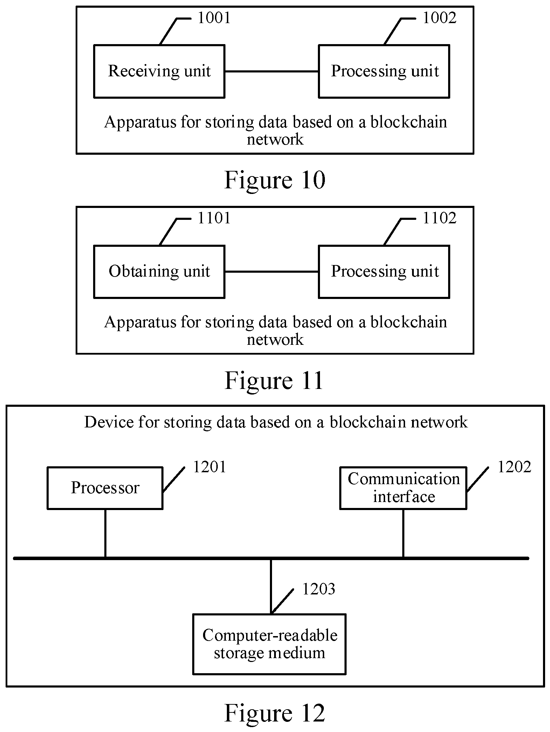

Figure 10 is a schematic structural diagram of an apparatus for storing data based on a blockchain network according to an embodiment of the present disclosure. The apparatus for storing data based on the blockchain network may be a computer program (including a program code) running in a target storage node. The apparatus for storing data based on the blockchain network may be configured to perform some or all of the steps in the method embodiments as shown in Figure 2 or Figure 7. The blockchain network comprises a consensus node and a target storage node, a blockchain is deployed at the consensus node, and the apparatus for storing data is deployed at the target storage node. Reference may be made to Figure 10, where the apparatus for storing data based on the blockchain network comprises a receiving unit 1001 and a processing unit 1002 as follows.

The receiving unit 1001 is configured receive a storage request transmitted by a target device, where the storage request carries multimedia data.

The processing unit 1002 is configured to store the multimedia data in a local space of the target storage node, and generate a target storage certificate for the multimedia data, where the target storage certificate is configured to certify that the multimedia data is stored in the target storage node.

The processing unit 1002 is further configured to transmit the target storage certificate to the consensus node to enable the consensus node to: perform verification on the multimedia data according to the target storage certificate through a consensus mechanism in response to receiving a request, which is for adding the multimedia data onto the blockchain and is transmitted by the target device, and store an identifier of the multimedia data into the blockchain at the consensus node in response to the multimedia data passing the verification. The identifier stored in the blockchain indicates that the multimedia data is successfully stored in the blockchain system.

In an implementation, when the processing unit 1002 generates the target storage certificate for the multimedia data, the processing unit 1002 is specifically configured to: obtain the identifier of the multimedia data; obtain a node identifier of the target storage node; and generate the target storage certificate for the multimedia data based on the identifier and the node identifier.

In an implementation, when the processing unit 1002 obtains the identifier of the multimedia data, the processing unit 1002 is specifically configured to: analyze the multimedia data to obtain a data attribute of the multimedia data; and hash the data attribute to obtain the identifier of the multimedia data, or determining that the data attribute serves directly as the identifier of the multimedia data.

In an implementation, when the processing unit 1002 analyzes the multimedia data to obtain the data attribute of the multimedia data, the processing unit 1002 is specifically configured to at least one of: extract a data feature from the multimedia data, and add the data features into the data attribute of the multimedia data; extract a keyword from the multimedia data, and add the keyword into the data attribute of the multimedia data; or extract an abstract from the multimedia data which is text, and add the abstract into the data attribute of the multimedia data.

In an implementation, the target storage node is of a first node type or a second node type. The first node type refers to that at least two storage nodes are required to maintain a piece of data jointly, and the second node type refers to that a storage node maintain a piece of data independently.

In an implementation, the target storage node is of the first node type. The blockchain network comprises N storage nodes of the first node type, where N is an integer greater than 1, the target storage node is one of the N storage nodes, and the processing unit 1002 is further configured to: select one or more reference storage nodes of which a quantity is M from remaining storage nodes, where M ranges from 1 to N-1, and the one or more remaining storage nodes are other than the target storage node among the N storage nodes; and synchronize the multimedia data to the one or more reference storage nodes to enable each reference storage node to transmit a reference storage certificate for the multimedia data to the consensus node in response to such reference storage node storing the multimedia data, and enable the consensus node to perform the verification on the multimedia data according to the target storage certificate and the reference storage certificate transmitted by each reference storage node in response to the consensus node receiving the request.

In an implementation, each storage node corresponds to a level, and when the consensus node performs the verification on the multimedia data according to the target storage certificate and the reference storage certificate, the consensus node is configured to: determine the multimedia data to pass the verification in response to a quantity of the target storage certificate and the reference storage certificate in the blockchain network being greater than a quantity threshold; determine the multimedia data to pass the verification in response to a quantity of storage certificates corresponding to storage nodes storing the multimedia data in each level being greater than a quantity threshold corresponding to such level; or calculate a weighted sum of quantities of storage certificates corresponding to storage nodes storing the multimedia data at all levels to obtain a storage evaluation score, and determine the multimedia data to pass the verification in response to the storage evaluation score being greater than a score threshold.

In an implementation, the processing unit 1002 is further configured to: receive a data-access request transmitted by an access device, where the data-access request carries the identifier of the multimedia data and an identifier of the access device; read current ownership information of the multimedia data from the blockchain according to the identifier, where the current ownership information comprises an identifier of a current device, and the current device is a device having ownership of the multimedia data when the data-access request is received; search the current ownership information for the identifier of the access device; and determine that the access device has permission to access the multimedia data and return the multimedia data to the access device, in a case that the identifier of the access device is found in the current ownership information.

In one embodiment, the units in the apparatus for storing data based on the blockchain network as shown in Figure 10 may be separately or wholly combined into one or more other units, or one (or more) of the units may be divided into multiple units of lesser functions. Hence, the same operations can be implemented without affecting the technical effects of the embodiments of the present disclosure. The foregoing units are divided based on logical functions. In a practice, a function of one unit may be implemented by multiple units, or functions of a multiple units may be implemented by one unit. In other embodiments, the apparatus for storing data based on the blockchain network may further include other units. In practice, the functions may be implemented with coordination of another unit and may be cooperatively implemented by multiple units. In another embodiment, a computer program (including a program code) that can perform the steps in the corresponding methods as shown in Figure 2 or Figure 7 may be executed on a general computing device, such as a computer, which comprises a processing element and a storage element, for example, a central processing unit (CPU), a random access memory (RAM), and a read-only memory (ROM), in order to construct the apparatus for storing data based on the blockchain network as shown in Figure 10 and implement the method for storing data based on the blockchain network according to embodiments of the present disclosure. The computer program may be recorded in, for example, a computer readable recording medium, loaded into the foregoing computing device via the computer readable recording medium, and executed on the computing device.

Herein the processing unit 1002 can store the multimedia data carried in the storage request into the local space of the target storage node after the receiving unit 1001 receives a storage request transmitted by the target device. The processing unit 1002 transmits the target storage certificate generated based on the multimedia data to the consensus node of the blockchain network, such that the consensus node can store the identifier of the multimedia data into the blockchain at the consensus node. The data identifier in the blockchain can be used for representing that the multimedia data indicated by the data identifier has been stored in the blockchain network. In the above process, the target storage node independent from the consensus node is configured to store the multimedia data having a large data volume, and the blockchain stores only the data identifier having a small data volume. Such separate storage of the multimedia data and the data identifier can improve security of the multimedia data to some extent, and can reduce a storage stress of the blockchain effectively, in comparison with a scheme of storing the multimedia data into the blockchain. Hence, a storage stress of the consensus node is reduces, and operation efficiency and stability of the consensus node are improved.

Figure 11 is a schematic structural diagram of an apparatus for storing data based on a blockchain network according to an embodiment of the present disclosure. The apparatus for storing data based on the blockchain network may be a computer program (including a program code) running in a consensus node. The apparatus for storing data based on the blockchain network may be configured to perform some or all of the steps in the method embodiments as shown in Figure 6 or Figure 7. The blockchain network comprises a consensus node and a target storage node, a blockchain is deployed at the consensus node, and the apparatus for storing data is deployed at the consensus node. Reference may be made to Figure 11, where the apparatus for storing data based on the blockchain network comprises an obtaining unit 1101 and a processing unit 1102 as follows.

The obtaining unit 1101 is configured to receive a request which is for adding multimedia data onto the blockchain and is transmitted by a target device.

The obtaining unit 1101 is further configured to obtain a target storage certificate for the multimedia data, the target storage certificate is generated and transmitted to the consensus node by the target storage node in response to the target storage node receiving a storage request transmitted by the target device, and the target storage certificate is configured to certify that the multimedia data is stored in the target storage node.

The processing unit 1102 is configured to perform verification on the multimedia data according to the target storage certificate through a consensus mechanism, and store an identifier of the multimedia data into the blockchain at the consensus node in response to the multimedia data passing the verification. The identifier stored in the blockchain indicates that the multimedia data is successfully stored in the blockchain system.

In an implementation, the target storage node is of a first node type or a second node type. The first node type refers to that at least two storage nodes are required to maintain a piece of data jointly, and the second node type refers to that a storage node maintain a piece of data independently.

In an implementation, the target storage node is of the first node type. The blockchain network comprises N storage nodes of the first node type, where N is an integer greater than 1, the target storage node is one of the N storage nodes.

The obtaining unit 1101 is further configured to: obtain a reference storage certificate for the multimedia data, where the reference storage certificate is generated and transmitted to the consensus node by each of one or more reference storage nodes, of which a quantity is M, in response to the target storage node synchronizing the multimedia data to the one or more reference storage nodes and the one or more reference storage nodes storing the multimedia data, the one or more reference storage nodes are selected from remaining storage nodes which are other than the target storage node among the N storage nodes, and M ranges from 1 to N-1.

The processing unit 1102 is specifically configured to perform the verification on the multimedia data according to the target storage certificate and the reference storage certificate through the consensus mechanism.

In an implementation, each storage node corresponds to a level, and the processing unit 1102 is specifically configured to: determine the multimedia data to pass the verification in response to a quantity of the target storage certificate and the reference storage certificate in the blockchain network being greater than a quantity threshold; determine the multimedia data to pass the verification in response to a quantity of storage certificates corresponding to storage nodes storing the multimedia data in each level being greater than a quantity threshold corresponding to such level; or calculate a weighted sum of quantities of storage certificates corresponding to storage nodes storing the multimedia data at all levels to obtain a storage evaluation score, and determine the multimedia data to pass the verification in response to the storage evaluation score being greater than a score threshold.

In an implementation, the target storage certificate is stored into the blockchain. When the processing unit 1102 perform the verification on the multimedia data according to the target storage certificate through the consensus mechanism, the processing unit 1102 is specifically configured to: obtain a node type of the target storage node; in a case that the node type is the first node type, calculate a quantity of storage certificates which are for the multimedia data and are stored in the blockchain, and determine the multimedia data to pass the verification in response to the quantity being greater than a quantity threshold; and in a case that the node type is the second node type, determine the multimedia data to pass the verification.

In an implementation, the blockchain network comprises N storage nodes of the first node type, N is an integer greater than 1, the target storage node is one of the N storage nodes, the multimedia data is synchronized to one or more reference storage nodes of which a quantity is M among the N storage nodes, and M ranges from 1 to N-1.

The processing unit 1102 is further configured to: receive a data-access request transmitted by an access device, where the data-access request carries the identifier of the multimedia data and an identifier of the access device; read current ownership information of the multimedia data from the blockchain according to the identifier, where the current ownership information comprises an identifier of a current device, and the current device is a device that has ownership of the multimedia data when the data-access request is received; search the current ownership information for the identifier of the access device; and select a benchmark storage node from the one or more reference storage nodes and the target storage node, and transmit the multimedia data to the access device through the benchmark storage node, in a case that the identifier of the access device is found in the current ownership information.

In an implementation, when the processing unit 1102 selects the benchmark storage node from the one or more reference storage nodes and the target storage node, the processing unit 1102 is specifically configured to: select a storage node randomly from the one or more reference storage nodes and the target storage node as the benchmark storage node; calculate a distance between each storage node, of the M reference storage nodes and the target storage node, and the consensus node, and determine a storage node having the shortest distance to the consensus node as the benchmark storage node; or detect a network status of each storage node, of the M reference storage nodes and the target storage node, and determine a storage node of which the network status meets a preset condition as the benchmark storage node.

In an implementation, when the processing unit 1102 transmits the multimedia data to the access device through the benchmark storage node, the processing unit 1102 is specifically configured to: transmit a data-fetch request to the benchmark storage node, receive the multimedia data returned by the benchmark storage node, and transmit the multimedia data to the access device; transmit a data notification message to the benchmark storage node, where the data notification message is configured to instruct the benchmark storage node to transmit the multimedia data to the access device; or return a node identifier of the benchmark storage node to the access device to enable the access device to: transmit a data-access request to the benchmark storage node based on the node identifier of the reference storage node and receive the multimedia data returned by the reference storage node; where the data-fetch request is for requesting the benchmark storage node to return the multimedia data,

In an implementation, the processing unit 1102 is further configured to: in response to determining that the target device has ownership of the multimedia data, generate initial ownership information of the multimedia data according to an identifier of the target device and store the initial ownership information into the blockchain; and in response to receiving an ownership update transmitted by the target device, update the initial ownership information in the blockchain according to the ownership update.

In an implementation, the processing unit 1102 is specifically configured to: perform the verification on the multimedia data according to the target storage certificate according to a consensus policy.

In an implementation, the consensus policy is stored in the blockchain as a smart contract, or the consensus policy is embedded in an operating system of the consensus node.

In one embodiment, the units in the apparatus for storing data based on the blockchain network as shown in Figure 11 may be separately or wholly combined into one or more other units, or one (or more) of the units may be divided into multiple units of lesser functions. Hence, the same operations can be implemented without affecting the technical effects of the embodiments of the present disclosure. The foregoing units are divided based on logical functions. In a practice, a function of one unit may be implemented by multiple units, or functions of a multiple units may be implemented by one unit. In other embodiments, the apparatus for storing data based on the blockchain network may further include other units. In practice, the functions may be implemented with coordination of another unit and may be cooperatively implemented by multiple units. In another embodiment, a computer program (including a program code) that can perform the steps in the corresponding methods as shown in Figure 6 or Figure 7 may be executed on a general computing device, such as a computer, which comprises a processing element and a storage element, for example, a central processing unit (CPU), a random access memory (RAM), and a read-only memory (ROM), in order to construct the apparatus for storing data based on the blockchain network as shown in Figure 11 and implement the method for storing data based on the blockchain network according to embodiments of the present disclosure. The computer program may be recorded in, for example, a computer readable recording medium, loaded into the foregoing computing device via the computer readable recording medium, and executed on the computing device.

Herein the processing unit 1102 performs the verification on the multimedia data through the consensus mechanism, and stores the identifier of the multimedia data into the blockchain at the consensus node in response to the multimedia data passing the verification, after the obtaining unit 1101 receives the target storage certificate for the multimedia data. The data identifier in the blockchain indicates that the multimedia data has been successfully stored into the blockchain network. In the above process, the target storage node independent from the consensus node is configured to store the multimedia data having a large data volume, and the blockchain stores only the data identifier having a small data volume. Such separate storage of the multimedia data and the data identifier can improve security of the multimedia data to some extent, and can reduce a storage stress of the blockchain effectively, in comparison with a scheme of storing the multimedia data into the blockchain. Hence, a storage stress of the consensus node is reduces, and operation efficiency and stability of the consensus node are improved.

Figure 12 is a schematic structural diagram of a device for storing data based on a blockchain network according to an embodiment of the present disclosure. As shown Figure 12, the terminal comprises a processor 1201, a communication interface 1202, and a computer-readable storage medium 1203. The processor 1201, the communication interface 1202, and the computer-readable storage medium 1203 may be connected via a bus or another means. The communication interface 1202 is configured to receive or transmit data. The computer-readable storage medium 1203 may be stored in a memory of the terminal. The computer-readable storage medium 1203 is configured to store a computer program. The computer-readable program comprises program instructions. The processor 1201 is configured to execute the program instructions stored in the computer-readable storage medium 1203. The processor 1201 (or called a central processing unit (CPU)) is a computing core and a control core of the terminal, is suitable for implementing one or more instructions, and is specifically suitable for loading and executing the one or more instructions to implement a flow of the method for storing data based on the blockchain network or corresponding functions.

A computer-readable storage medium (memory) is further provided according to an embodiment of the present disclosure. The computer-readable storage medium is a storage device in a terminal and is configured to store programs and data. The computer-readable storage medium herein may include an internal storage medium of the terminal or an extended storage medium supported by the terminal. The computer-readable storage medium provides a storage space, and an operating system of the terminal is stored in the storage space. In addition, one or more instructions suitable for being loaded and executed by the processor 1201 are further stored in the storage space. The instructions may be one or more computer programs (including program codes). The computer-readable storage medium herein may be a high-speed RAM or a nonvolatile memory, for example, at least one magnetic disk memory. Optionally, the computer storage medium may further be at least one computer-readable storage medium remote with respect to the foregoing processor.

In an embodiment, the computer-readable storage medium stores one or more instructions. The one or more instructions stored in the computer-readable storage medium are loaded and executed by the processor 1201, so as to implement the corresponding steps in the foregoing method for storing data embodiment based on the blockchain network.

A computer program product or a computer program is further provided according ot an embodiment of the present disclosure. The computer program product or the computer program comprises computer instructions. The computer instructions are stored in a computer-readable storage medium. A processor of a device for storing data reads the computer instructions from the computer-readable storage medium, and executes the computer instructions to cause the device for storing data to perform the method for storing data based on the blockchain network.

As further be appreciated by those skilled in the art, the units and algorithmic steps in the examples described according to the embodiments disclosed herein can be implemented in forms of electronic hardware, computer software or the combination of the both. Whether hardware or software is used to implement the functions depends on a specific application and design constraints for the technical solution. For each specific application, different methods may be used by those skilled in the art to implement the described function, and such implementation should not be considered to depart from the scope of this invention.

All or some of the foregoing embodiments may be implemented by using software, hardware, firmware, or any combination thereof. When the software is used for implementation, all or some of the embodiments may be implemented in a form of a computer program product. The computer program product comprises one or more computer instructions. When the computer program instructions are loaded and executed on a computer, the procedures or functions according to embodiments of the present invention are all or partially generated. The computer may be a general-purpose computer, a special-purpose computer, a computer network, or another programmable device. The computer instruction may be stored in a computer-readable storage medium, or transmitted by using the computer-readable storage medium. For example, the computer instructions may be transmitted from a website, a computer, a server, or a data center to another website, computer, server, or data center in a wired manner (for example, a coaxial cable, an optical fiber, or a digital subscriber line (DSL)) or a wireless manner (for example, infrared, radio, or microwave). The computer-readable storage medium may be any applicable medium which is accessible by a computer, or a data storage device, such as a server or a data center, integrating one or more applicable media. The applicable medium may be a magnetic medium (for example, a soft disk, a hard disk, or a magnetic tape), an optical medium (for example, a DVD), a semiconductor medium (for example, a solid state disk (solid state disk, SSD)), or the like.

What is described above is merely specific implementations of the present disclosure, and is not intended for limiting the protection scope of the present disclosure. Those skilled in the art can make any variation or replacement readily within the technical scope disclosed herein, and such variation or replacement shall fall within the protection scope of the present disclosure. Therefore, the protection scope of the present invention shall be subject to the protection scope of the claims.

## Claims

1. A method for storing data based on a blockchain network, wherein the blockchain network comprises a consensus node and a target storage node, a blockchain is deployed at the consensus node, and the method is executable by the target storage node and comprises:
receiving a storage request transmitted by a target device, wherein the storage request carries multimedia data;
storing the multimedia data in a local space of the target storage node, and generating a target storage certificate for the multimedia data, wherein the target storage certificate is configured to certify that the multimedia data is stored in the target storage node; and
transmitting the target storage certificate to the consensus node to enable the consensus node to:
perform verification on the multimedia data through a consensus mechanism according to the target storage certificate in response to receiving a request, which is for adding the multimedia data onto the blockchain and is transmitted by the target device, and
store an identifier of the multimedia data into the blockchain at the consensus node in response to the multimedia data passing the verification,
wherein the identifier stored in the blockchain indicates that the multimedia data is successfully stored in the blockchain system.

2. The method according to claim 1, wherein generating the target storage certificate for the multimedia data comprises:
obtaining the identifier of the multimedia data;
obtaining a node identifier of the target storage node; and
generating the target storage certificate for the multimedia data based on the identifier and the node identifier.

3. The method according to claim 2, wherein obtaining the identifier of the multimedia data comprises:
analyzing the multimedia data to obtain a data attribute of the multimedia data; and
hashing the data attribute to obtain the identifier of the multimedia data, or determining that the data attribute serves directly as the identifier of the multimedia data.

4. The method according to claim 3, wherein analyzing the multimedia data to obtain the data attribute of the multimedia data comprises at least one of:
extracting a data feature from the multimedia data, and adding the data features into the data attribute of the multimedia data;
extracting a keyword from the multimedia data, and adding the keyword into the data attribute of the multimedia data; or
extracting an abstract from the multimedia data which is text, and adding the abstract into the data attribute of the multimedia data.

5. The method according to claim 1, wherein:
the target storage node is of a first node type or a second node type; and
the first node type refers to that at least two storage nodes are required to maintain a piece of data jointly, and the second node type refers to that a storage node maintain a piece of data independently.

6. The method according to claim 5, wherein:
the blockchain network comprises N storage nodes of the first node type, N is an integer greater than 1, the target storage node is one of the N storage nodes; and
the method further comprises:
selecting one or more reference storage nodes of which a quantity is M from remaining storage nodes, wherein M ranges from 1 to N-1, and the one or more remaining storage nodes are other than the target storage node among the N storage nodes; and
synchronizing the multimedia data to the one or more reference storage nodes to:
enable each reference storage node to transmit a reference storage certificate for the multimedia data to the consensus node in response to such reference storage node storing the multimedia data, and
enable the consensus node to perform the verification on the multimedia data according to the target storage certificate and the reference storage certificate transmitted by each reference storage node in response to the consensus node receiving the request.

7. The method according to claim 6, wherein each storage node corresponds to a level, and performing the verification by the consensus node on the multimedia data according to the target storage certificate and the reference storage certificate comprises:
determining the multimedia data to pass the verification in response to a quantity of the target storage certificate and the reference storage certificate in the blockchain network being greater than a quantity threshold;
determining the multimedia data to pass the verification in response to a quantity of storage certificates corresponding to storage nodes storing the multimedia data in each level being greater than a quantity threshold corresponding to such level; or
calculating a weighted sum of quantities of storage certificates corresponding to storage nodes storing the multimedia data at all levels to obtain a storage evaluation score, and determining the multimedia data to pass the verification in response to the storage evaluation score being greater than a score threshold.

8. The method according to claim 1, further comprising:
receiving a data-access request transmitted by an access device, wherein the data-access request carries the identifier of the multimedia data and an identifier of the access device;
reading current ownership information of the multimedia data from the blockchain according to the identifier, wherein the current ownership information comprises an identifier of a current device, and the current device is a device having ownership of the multimedia data when the data-access request is received;
searching the current ownership information for the identifier of the access device; and
determining that the access device has permission to access the multimedia data and returning the multimedia data to the access device, in a case that the identifier of the access device is found in the current ownership information.

9. A method for storing data based on a blockchain network, wherein the blockchain network comprising a consensus node and a target storage node, a blockchain is deployed at the consensus node, and the method is executable by the consensus node and comprises:
receiving a request which is for adding multimedia data onto the blockchain and is transmitted by a target device;
obtaining a target storage certificate for the multimedia data, wherein the target storage certificate is generated and transmitted to the consensus node by the target storage node in response to the target storage node receiving a storage request transmitted by the target device, and the target storage certificate is configured to certify that the multimedia data is stored in the target storage node;
performing verification on the multimedia data through a consensus mechanism according to the target storage certificate; and
storing an identifier of the multimedia data into the blockchain at the consensus node in response to the multimedia data passing the verification;
wherein the identifier stored in the blockchain indicates that the multimedia data is successfully stored in the blockchain system.

10. The method according to claim 9, wherein:
the target storage node is of a first node type or a second node type;
the first node type refers to that at least two storage nodes are required to maintain a piece of data jointly, and the second node type refers to that a storage node maintain a piece of data independently.

11. The method according to claim 10, wherein the blockchain network comprises N storage nodes of the first node type, N is an integer greater than 1, the target storage node is one of the N storage nodes, and the method further comprises:
obtaining a reference storage certificate for the multimedia data, wherein:
the reference storage certificate is generated and transmitted to the consensus node by each of one or more reference storage nodes, of which a quantity is M, in response to the target storage node synchronizing the multimedia data to the one or more reference storage nodes and the one or more reference storage nodes storing the multimedia data,
the one or more reference storage nodes are selected from remaining storage nodes which are other than the target storage node among the N storage nodes, and
M ranges from 1 to N-1; and
performing the verification on the multimedia data according to the target storage certificate through the consensus mechanism comprises:
performing consensus verification on the multimedia data according to the target storage certificate and the reference storage certificate through the consensus mechanism.

12. The method according to claim 11, wherein each storage node corresponds to a level, and performing the verification on the multimedia data according to the target storage certificate and the reference storage certificate through the consensus mechanism comprises:
determining the multimedia data to pass the verification in response to a quantity of the target storage certificate and the reference storage certificate in the blockchain network being greater than a quantity threshold;
determining the multimedia data to pass the verification in response to a quantity of storage certificates corresponding to storage nodes storing the multimedia data in each level being greater than a quantity threshold corresponding to such level; or
calculating a weighted sum of quantities of storage certificates corresponding to storage nodes storing the multimedia data at all levels to obtain a storage evaluation score, and determining the multimedia data to pass the verification in response to the storage evaluation score being greater than a score threshold.

13. The method according to claim 10, wherein performing the verification on the multimedia data according to the target storage certificate through the consensus mechanism comprises:
obtaining a node type of the target storage node;
in a case that the node type is the first node type, calculating a quantity of storage certificates which are for the multimedia data and are stored in the blockchain, and determining the multimedia data to pass the verification in response to the quantity being greater than a quantity threshold; and
in a case that the node type is the second node type, determining the multimedia data to pass the verification.

14. The method according to claim 9, wherein
the blockchain network comprises N storage nodes of the first node type, N is an integer greater than 1, the target storage node is one of the N storage nodes, the multimedia data is synchronized to one or more reference storage nodes of which a quantity is M among the N storage nodes, and M ranges from 1 to N-1;
the method further comprises:
receiving a data-access request transmitted by an access device, wherein the data-access request carries the identifier of the multimedia data and an identifier of the access device;
reading current ownership information of the multimedia data from the blockchain according to the identifier, wherein the current ownership information comprises an identifier of a current device, and the current device is a device that has ownership of the multimedia data when the data-access request is received;
searching the current ownership information for the identifier of the access device; and
selecting a benchmark storage node from the one or more reference storage nodes and the target storage node, and transmitting the multimedia data to the access device through the benchmark storage node, in a case that the identifier of the access device is found in the current ownership information.

15. The method according to claim 14, wherein the selecting the benchmark storage node from the one or more reference storage nodes and the target storage node comprises:
selecting a storage node randomly from the one or more reference storage nodes and the target storage node as the benchmark storage node;
calculating a distance between each storage node, of the M reference storage nodes and the target storage node, and the consensus node, and determining a storage node having the shortest distance to the consensus node as the benchmark storage node; or
detecting a network status of each storage node, of the M reference storage nodes and the target storage node, and determine a storage node of which the network status meets a preset condition as the benchmark storage node.

16. The method according to claim 14, wherein transmitting the multimedia data to the access device through the benchmark storage node comprises:
transmitting a data-fetch request to the benchmark storage node, receiving the multimedia data returned by the benchmark storage node, and transmitting the multimedia data to the access device;
transmit a data notification message to the benchmark storage node, wherein the data notification message is configured to instruct the benchmark storage node to transmit the multimedia data to the access device; or
returning a node identifier of the benchmark storage node to the access device to enable the access device to transmit a data-access request to the benchmark storage node based on the node identifier and receive the multimedia data returned by the reference storage node;
wherein the data-fetch request is for requesting the benchmark storage node to return the multimedia data.

17. The method according to claim 9, further comprising:
in response to determining that the target device has ownership of the multimedia data, generating initial ownership information of the multimedia data according to an identifier of the target device, and storing the initial ownership information into the blockchain; and
in response to receiving an ownership update transmitted by the target device, updating the initial ownership information in the blockchain according to the ownership update.

18. The method according to claim 9, wherein performing the verification on the multimedia data according to the target storage certificate through the consensus mechanism comprises:
performing the verification on the multimedia data according to the target storage certificate according to a consensus policy.

19. The method according to claim 18, wherein the consensus policy is stored in the blockchain as a smart contract, or the consensus policy is embedded in an operating system of the consensus node.

20. An apparatus for storing data based on a blockchain network, wherein the blockchain network comprises a consensus node and a target storage node, a blockchain is deployed at the consensus node, and the apparatus is deployed at the target storage node and comprises:
a receiving unit, configured to receive a storage request transmitted by a target device, wherein the storage request carries multimedia data; and
a processing unit, configured to:
store the multimedia data in a local space of the target storage node, and generate a target storage certificate for the multimedia data, wherein the target storage certificate is configured to certify that the multimedia data is stored in the target storage node; and
transmit the target storage certificate to the consensus node to enable the consensus node to:
perform verification on the multimedia data according to the target storage certificate through a consensus mechanism in response to receiving a request, which is for adding the multimedia data onto the blockchain and is transmitted by the target device, and
store an identifier of the multimedia data into the blockchain at the consensus node in response to the multimedia data passing the verification;
wherein the identifier stored in the blockchain indicates that the multimedia data is successfully stored in the blockchain system.

21. An apparatus for storing data based on a blockchain network, the blockchain network comprises a consensus node and a target storage node, a blockchain is deployed at the consensus node, and the apparatus is deployed at the consensus node and comprises:
an obtaining unit, configured to:
receive a request which is for adding multimedia data onto the blockchain and is transmitted by a target device;
obtain a target storage certificate for the multimedia data, wherein the target storage certificate is generated and transmitted to the consensus node by the target storage node in response to the target storage node receiving a storage request transmitted by the target device, and the target storage certificate is configured to certify that the multimedia data is stored in the target storage node; and
a processing unit, configured to perform verification on the multimedia data according to the target storage certificate through a consensus mechanism, and store an identifier of the multimedia data into the blockchain at the consensus node in response to the multimedia data passing the verification;
wherein the identifier stored in the blockchain indicates that the multimedia data is successfully stored in the blockchain system.

22. A device for storing data based on a blockchain network, comprising:
a processor, configured to execute a computer program; and
a computer-readable storage medium, storing a computer program;
wherein the computer program when executed by the processor implements the method according to any one of claims 1 to 8, or the method according to any one of claims 9 to 19.

23. A computer-readable storage medium, comprising a computer program, wherein:
the computer program is configured to be loaded and executed by a processor to perform the method according to any one of claims 1 to 8, or the method according to any one of claims 9 to 19.

24. A computer program product, wherein the computer program product when executed is configured to perform the method according to any one of claims 1 to 8, or the method according to any one of claims 9 to 19.
